# EUROPÄISCHE PATENTSCHRIFT

(11) **EP 2 791 607 B1**
(45) Veröffentlichungstag und Bekanntmachung des Hinweises auf die Patenterteilung: **08.06.2016**
(21) Anmeldenummer: 13701214.2
(22) Anmeldetag: 09.01.2013
(51) Int. Cl.: F28C 1/02

(54) **KÜHLVORRICHTUNG**
COOLING DEVICE
DISPOSITIF DE REFROIDISSEMENT

(30) Priorität: 11.01.2012 DE 102012000389
(43) Veröffentlichungstag der Anmeldung: 22.10.2014
(73) Patentinhaber: AAA Water Technologies AG, 6330 Cham (CH)
(72) Erfinder: HEINZL, Wolfgang, 83561 Ramerberg (DE)
(74) Vertreter: Manitz, Finsterwald & Partner GbR
(86) Internationale Anmeldenummer: PCT/EP2013/050250
(87) Internationale Veröffentlichungsnummer: WO 2013/104640

(56) Entgegenhaltungen:
- WO-A1-2012/062392
- WO-A1-2013/037554
- US-A- 4 452 300
- US-A- 5 535 989

## Beschreibung

Die Erfindung betrifft eine Kühlvorrichtung zur Kühlung einer Flüssigkeit, insbesondere Wasser, mit einem vertikalen Kühlturm nach dem Oberbegriff des Anspruchs 1. So eine Vorrichtung ist aus US 6 672 009 B1 bekannt. Sie betrifft ferner eine Membrandestillationsanlage mit einer mehrstufigen Membrandestillationsvorrichtung und einer solchen Kühlvorrichtung.

Bei Nasskühltürmen, wie sie beispielsweise in Kraftwerken eingesetzt werden, wird das abzukühlende Wasser über eine große Oberfläche mit einem möglichst dünnen Film verrieselt. Um eine möglichst gute Verteilung des Wassers auf den Rieselflächen zu erreichen, können dem Wasser Netzmittel zugegeben werden.

In Naturzugkühltürmen entsteht durch warmes Wasser, das dem Kühlturm in einem oberen Bereich zugeführt und auf seinem Weg nach unten durch Verdampfung abgekühlt wird, ein Aufwind. Dabei strömt Luft mit den Umgebungsparametern Druck, Temperatur und Feuchte von unten in den Kühlturm. Die Luft verlässt den oberen Bereich des Kühlturms an der Sättigungsgrenze.

Bei den bisher üblichen Kühltürme kann es durch nasse, warme Oberflächen zu einem Wachstum von Organik im Kühlturm kommen. So können sich bei bestimmten Betriebsbedingungen unter anderem Legionellen entwickeln, was nur durch die Verwendung von Desinfektionsmitteln oder durch eine deutliche Verschiebung des pH-Werts verhindert werden kann.

Das in dem Kühlturm eingebrachte Rohwasser enthält Inhaltsstoffe wie beispielsweise Mineralien. In bestimmten Fällen soll im Kühlturm eine möglichst hohe Aufkonzentration der mit dem Rohwasser eingebrachten Inhaltsstoffe erreicht werden, um den Frischwasserbedarf zu reduzieren und auch um die Absalzwassermenge, die erforderlich ist, um die Konzentration der Wasserinhaltsstoffe im Kühlturmwasser nicht über einen bestimmten Grenzwert ansteigen zu lassen, klein zu halten. Dabei bestimmt die Gefahr eines so genannten Scaling, nämlich der Bildung von mineralischen Ablagerungen, den Grenzwert der Konzentration. Dieser Grenzwert kann nun zwar durch die Verwendung von Antiscalents nach oben verschoben werden. Mit solchen Antiscalents wird jedoch das Absalzwasser zusätzlich belastet. Dies gilt sowohl für Naturzugkühltürme als auch für zwangsbelüftete Nasskühltürme.

Es sind auch bereits so genannte indirekte Kühltürme bekannt, bei denen das Wasser nicht in direkten Kontakt mit der Luft kommt sondern durch Trennwände wie beispielsweise Rohre von der Luft getrennt ist. Derartige Kühltürme sind stets zwangsbelüftet, d.h. es wird mittels eines Gebläses Luft über die trockenen Oberflächen geblasen. Solche Kühltürme erreichen nicht die unteren Temperaturen eines durch Verdunstung gekühlten Nasskühlturms. Da keine Temperaturänderung durch Phasenwechsel wie bei der Verdunstung entsteht, sind auch die Oberflächen deutlich größer.

Herkömmliche Kühlvorrichtungen zur Kühlung einer Flüssigkeit sind aus den Druckschriften US 6 672 099 B1 und US 4 452 300 A bekannt.

Der Erfindung liegt die Aufgabe zugrunde, eine verbesserte Kühlvorrichtung der eingangs genannten Art zu schaffen, bei der die zuvor angeführten Probleme beseitigt sind. Dabei soll der Wärmetauschvorgang an möglichst trockenen Oberflächen erfolgen, wobei trotz der trockenen Wärmetauscherflächen die thermische Flächenleistung eines herkömmlichen Nasskühlturms erreicht werden soll. Ferner soll eine Membrandestillationsanlage mit einer solchen Kühlvorrichtung angegeben werden, in der die Kühlvorrichtung mit Vorteil genutzt wird.

Die Aufgabe wird erfindungsgemäß gelöst durch eine Kühlvorrichtung mit den Merkmalen des Anspruchs 1. Erfindungsgemäß wird somit eine Kühlvorrichtung zur Kühlung einer Flüssigkeit, insbesondere Wasser, vorgeschlagen, die einen vertikalen Kühlturm umfasst, dem die abzukühlende Flüssigkeit in einem oberen Bereich zugeführt und aus dem die abgekühlte Flüssigkeit in einem unteren Bereich abgeführt wird. Dabei wird die Flüssigkeit in dem Kühlturm durch ein von unten nach oben strömendes Kühlgas, insbesondere Luft, abgekühlt. In dem vom Kühlgas durchströmten Gasraum des Kühlturms sind mehrere Einbauten vorgesehen, in denen die Flüssigkeit geführt ist. Dabei umfasst ein jeweiliger Einbau wenigstens einen Flüssigkeitskanal, der zumindest teilweise durch eine beidseitig dampfdurchlässige, flüssigkeitsdichte Membranwand vom Gasraum des Kühlturms getrennt ist. Ferner weist der Kühlturm ein oder mehrere Ventilatoren auf.

Aufgrund dieser Ausbildung ist einerseits sichergestellt, dass der Wärmetauschvorgang an trockenen Oberflächen erfolgt, während andererseits trotz dieser trockenen Oberflächen die thermische Flächenleistung eines herkömmlichen Nasskühlturms erreicht wird. Der bzw. die Einbauten wirken als Verdunster, deren Oberflächen die nach unten strömende Flüssigkeit von dem von unten nach oben strömenden Kühlgas trennen.

Ein Wachstum von Biologie auf den Oberflächen der als Verdunster wirkenden Einbauten wird vermieden. Die definierten Oberflächen der Einbauten sind für eine gezielte chemische Reinigung gut zugänglich. Da sämtliche Oberflächen der Einbauten definiert zugänglich sind, kann der Einsatz von Chemie gering gehalten werden, wobei eine optimale Gleichverteilung der betreffenden chemischen Reinigungsmittel sichergestellt ist. Da die chemische Reinigung zur Vermeidung der Gefahr eines Scalings an definierten Flächen erfolgen kann, ist eine höhere Aufkonzentration der Kühlturmflüssigkeit möglich.

Erfindungsgemäß sind die Einbauten vertikal aufeinander folgend und in Reihe geschaltet.

Bevorzugt umfasst wenigstens ein Einbau mehrere parallel geschaltete, sich vorzugsweise jeweils allgemein vertikal erstreckende Flüssigkeitskanäle. Dabei können die parallel geschalteten Flüssigkeitskanäle insbesondere horizontal nebeneinander angeordnet sein.

Gemäß einer bevorzugten praktischen Ausführungsform der erfindungsgemäßen Kühlvorrichtung ist wenigstens ein Einbau vorgesehen, der mehrere parallel geschaltete, horizontal nebeneinander angeordnete Flüssigkeitskanäle umfasst, die jeweils auf wenigstens zwei einander gegenüberliegenden Seiten durch eine Membranwand, insbesondere Flachmembran, vom Gasraum des Kühlturms getrennt sind, wobei ein jeweiliges Paar von horizontal benachbarten Flüssigkeitskanälen einander zugewandte Membranwände, insbesondere Flachmembranen, aufweist, die seitlich einen Gaskanal begrenzen, durch den Kühlgas des den Gasraum beaufschlagenden Kühlgasstroms hindurchströmt.

Dabei kann ein jeweiliger Einbau vorteilhafterweise mehrere miteinander verbundene Rahmenelemente umfassen, wobei die Funktionseinheiten Flüssigkeitskanal und Gaskanal jeweils in Form eines solchen Rahmenelements vorgesehen sind.

Die Rahmenelemente sind bevorzugt mit Stegstrukturen versehen und über diese Stegstrukturen miteinander verbunden.

Die Rahmenelemente können jeweils mit einem insbesondere gitterartigen Abstandshalter versehen sein.

Bevorzugt ist die zwischen einem jeweiligen Flüssigkeitskanal und einem jeweiligen diesem benachbarten Gaskanal vorgesehene Membranwand einem der beiden betreffenden aneinandergrenzenden Rahmenelemente zugeordnet.

Bei den bevorzugten Stegstrukturen, über die die einzelnen Rahmenelemente miteinander verbunden werden können, kann es sich beispielsweise um Schweißstegstrukturen oder Klebestrukturen handeln, über die die Rahmenelemente miteinander verschweißt bzw. verklebt werden. Im Fall von Schweißstegstrukturen kann zur Verbindung der Rahmenelemente beispielsweise ein Reibschweißverfahren, Laserschweißverfahren und/oder Heizelementschweißverfahren angewandt werden.

Die vertikal aufeinander folgenden, in Reihe geschalteten Einbauten sind erfindungsgemäß so miteinander verbunden, dass deren Flüssigkeitskanäle jeweils vollständig mit Flüssigkeit gefüllt sind.

Dies könnte nun zwar beispielsweise dadurch erreicht werden, dass der Flüssigkeitsabfluss abgedrosselt und eine Wassersäule aufgebaut wird. Die Wassersäule würde allerdings dazu führen, dass eine jeweilige Membran im unteren Bereich des Kühlturms infolge des höheren statischen Drucks einer höheren Druckbelastung ausgesetzt wäre als im oberen Bereich des Kühlturms.

Insbesondere zur Reduzierung dieser Druckbelastung sind die vertikal benachbarte Einbauten erfindungsgemäß jeweils über einen Rücklaufkanal miteinander verbunden, der zwischen einem in einem unteren Bereich eines Flüssigkeitskanals des in Strömungsrichtung der Flüssigkeit betrachtet vorangehenden Einbaus vorgesehenen Flüssigkeitsauslass und einem in einem oberen Bereich eines Flüssigkeitskanals des darauf folgenden Einbaus vorgesehenen Flüssigkeitseinlässes angeordnet und ausgehend vom Flüssigkeitsauslass des vorangehenden Einbaus zunächst zumindest bis zum obersten möglichen Flüssigkeitsniveau in diesem Einbau nach oben geführt ist.

Durch das Nachobenführen des Rücklaufs im Flüssigkeitsauslass des vorangehenden Einbaus zumindest bis zum obersten möglichen Flüssigkeitsniveau ist sichergestellt, dass der oder die flüssigkeitsführenden Flüssigkeitskanäle eines jeweiligen Einbaus jeweils vollständig mit Flüssigkeit gefüllt sind.

Dabei ist der Rücklaufkanal erfindungsgemäß nach Art eines U-Rohres ausgeführt. Hierbei umfasst der obere Bereich des Ablaufteils des nach Art eines U-Rohres ausgeführten Rücklaufkanals erfindungsgemäß einen Kanalabschnitt, der zumindest teilweise von einer weiteren vorzugsweise wieder beidseitig dampfdurchlässigen, flüssigkeitsdichten Membranwand begrenzt ist, die einerseits mit der Flüssigkeit und andererseits mit dem Gasraum des Kühlturms in Kontakt kommt. Damit ist sichergestellt, dass bei frei ablaufender Flüssigkeit unter Vermeidung eines Flüssigkeitsrückstaus über die Kühlturmhöhe an einem jeweiligen Einbau des Kühlturms stets nur maximal die Höhe der Flüssigkeitssäule eines Kühlturmeinbaus die jeweilige Membranwand belastet.

Es ist also beispielsweise eine Führung der Kühlturmflüssigkeit in einer U-Rohr-Vorrichtung nach dem Durchströmen der jeweils durch wenigstens eine Membranwand begrenzten Flüssigkeitskanäle mögliche, bei der die U-Rohr-Vorrichtung ein nach oben führendes Rohr mit einer 180°-Umlenkung, einem Fallrohr und einer hydrophoben, mikroporösen Membran umfasst. Die aus einem jeweiligen Kühlturmeinbau austretende Flüssigkeit wird so weit nach oben geführt, dass die jeweils durch wenigstens eine Membran begrenzten Flüssigkeitskanäle des Kühlturmeinbaus stets vollständig mit Flüssigkeit gefüllt sind. Die Fallrohre sind so dimensioniert, dass sie nie vollständig mit Flüssigkeit gefüllt sind und es somit nicht zu einer Addition des hydrostatischen Drucks der Kühlturmeinbauten von oben nach unten kommt. Damit im Stillstand das Fallrohr leer laufen kann, ist die U-Rohr-Vorrichtung in ihrem oberen Bereich vorteilhafterweise mit einem Stück mikroporöser, hydrophober Membran ausgestattet, die dampf- und insbesondere luftdurchlässig ist. Damit ist gewährleistet, dass beim Abschalten des zu kühlenden Wassers sich die Fallrohre entleeren können und umgekehrt bei einer Inbetriebnahme sich kein Gas- bzw. Luftpolster aufbauen kann, da das Gas bzw. die Luft über die Membran sowohl ausströmen als auch einströmen kann.

Die erfindungsgemäße Membrandestillationsanlage zeichnet sich durch die Merkmale des Anspruchs 9 aus. Erfindungsgemäß wird somit eine Membrandestillationsanlage mit einer mehrstufigen, einem Verdampfer, mehrere Kondensations- und Verdampfungsstufen sowie einen Kondensator umfassenden Membrandestillationsvorrichtung zur Aufkonzentration einer Flüssigkeit und einer erfindungsgemäßen Kühlvorrichtung nach einem der Ansprüche 1 bis 8 vorgeschlagen. Dabei wird die aufzukonzentrierende Flüssigkeit dem den Kondensator der Membrandestillationsvorrichtung und die Kühlvorrichtung umfassenden System zugeführt. Die Kühlvorrichtung ist der Membrandestillationsvorrichtung zur Vorkonzentration der Flüssigkeit vorgeschaltet. Dem Kondensator wird während der Vorkonzentration abgekühlte Flüssigkeit aus der Kühlvorrichtung als Kühlfluid zugeführt.

Gemäß einer bevorzugten Ausführungsform der erfindungsgemäßen Membrandestillationsanlage umfasst der Kondensator der Membrandestillationsvorrichtung einen Dampfraum sowie einen von diesem durch eine Kondensationswand getrennten Kühlfluidkanal, der während der Vorkonzentration Teil eines den bzw. die Einbauten der Kühlvorrichtung umfassenden Kühlmittelkreislaufs ist, in dem als Kühlmittel die aufzukonzentrierende Flüssigkeit zirkuliert.

Mit den Kühlturmeinbauten ergeben sich somit insbesondere aus der Kombination Kühlung und Aufkonzentration der Flüssigkeit mögliche neue Prozesse. Von Vorteil ist hierbei insbesondere die mögliche Aufkonzentration von salzhaltigen Wässern unter Verwendung des Nasskühlturms mit trockenen Oberflächen als Vorkonzentrator.

Eine mehrstufige, einen Verdampfer, mehrere Kondensations- und Verdampfungsstufen sowie einen Kondensator umfassende Membrandestillationsvorrichtung zur Aufkonzentration einer Flüssigkeit ist beispielsweise aus der WO 2007/054311 bekannt.

Bei einer solchen Membrandestillationsvorrichtung wird unter Einsatz von thermischer Energie Flüssigkeit verdampft und wieder kondensiert. Beim Verdampfen der Flüssigkeit verdampfen bei gegebener Temperatur die jeweiligen Bestandteile bei einem von dieser Temperatur abhängigen Dampfdruck, so dass einzelne Bestandteile auskondensiert werden. Die verdampfte Flüssigkeit wird vom Dampfraum durch eine mikroporöse, dampfdurchlässige, jedoch flüssigkeitsundurchlässige Membran getrennt.

Durch Temperatur- bzw. Dampfdruckunterschiede zwischen der aufzukonzentrierenden Flüssigkeit und dem Dampfraum entsteht an der Grenzfläche zwischen der aufkonzentrierenden Flüssigkeit und der Membran Dampf, der durch die Membran hindurchtritt.

Insbesondere zur Reduzierung der Ströme der aufzukonzentrierenden Flüssigkeit sowie des Dampfs kann eine jeweilige nachfolgende Kondensations- und Verdampfungsstufe mit ihrem Dampfraum unmittelbar an die Membranwand der vorangehenden Kondensations- und Verdampfungsstufe angrenzen, wobei die Membranwand den Flüssigkeitskanal der vorangehenden Kondensations- und Verdampfungsstufe von dem Dampfraum der nachfolgenden Kondensations- und Verdampfungsstufe trennt.

Der Verdampfer kann beispielsweise einen Heizfluidkanal, einen Flüssigkeitskanal für die aufzukonzentrierende Flüssigkeit, eine den Heizfluidkanal vom Flüssigkeitskanal trennende Tauscherwand und eine den Flüssigkeitskanal auf der der Tauscherwand gegenüberliegenden Seite begrenzende Membranwand umfassen, wobei eine erste Kondensations- und Verdampfungsstufe mit ihrem Dampfraum unmittelbar an die Membran des Verdampfers angrenzen und diese Membranwand somit dem Flüssigkeitskanal des Verdampfers von dem Dampfraum der ersten Kondensations- und Verdampfungsstufe trennen kann. Der Kondensator kann, wie bereits ausgeführt, beispielsweise einen Dampfraum, einen Kühlfluidkanal und eine den Dampfraum vom Kühlfluidkanal trennende Kondensationswand umfassen. Mit seinem Dampfraum kann der Kondensator vorteilhafterweise unmittelbar an die Membranwand der letzten Kondensations- und Verdampfungsstufe angrenzen, so dass diese Membranwand den Flüssigkeitskanal der letzten Kondensations- und Verdampfungsstufe von dem Dampfraum des Kondensators trennt.

Kondensation und Verdampfung können zumindest im Wesentlichen inertgasfrei und in einer jeweiligen nachfolgenden Kondensations- und Verdampfungsstufe mit einem niedrigeren Druck- und Temperaturniveau als in der vorangehenden Kondensations- und Verdampfungsstufe erfolgen. Die aufzukonzentrierende Flüssigkeit kann zur Absenkung deren Absolutdrucks mit Unterdruck beaufschlagt sein, wobei der Absolutdruck der aufzukonzentrierenden Flüssigkeit in einem jeweiligen Flüssigkeitskanal der Membrandestillationsvorrichtung bis zu dem der Flüssigkeitstemperatur in diesem Flüssigkeitskanal korrespondierenden Siededampfdruck abgesenkt ist. Die Dampfräume der Kondensations- und Verdampfungsstufen und des Kondensators können zur Absenkung deren Absolutdrucks unter den Umgebungsdruck mit Unterdruck beaufschlagt sein. Gemäß einer bevorzugten Ausführungsform der Membrandestillationsvorrichtung kann der Absolutdruck in einem jeweiligen Dampfraum zumindest im Wesentlichen bis zum Dampfdruck der über die angrenzende Membranwand benachbarten aufzukonzentrierenden Flüssigkeit und zusätzlich um den sich beim Strömen des Dampfs durch die angrenzende Membranwand ergebenden Differenzdruck abgesenkt sein. Der Unterdruck in einem jeweiligen Dampfraum entspricht also bevorzugt zumindest im Wesentlichen dem Dampfdruck der über die angrenzende Membranwand benachbart aufzukonzentrierenden Flüssigkeit, erhöht durch den sich beim Strömen des Dampfs durch die Membranwand ergebenden Differenzdruck, wobei zu beachten ist, dass ein erhöhter Unterdruck einem abgesenkten Absolutdruck entspricht.

Im Übrigen kann die Membrandestillationsvorrichtung beispielsweise so ausgeführt sein, wie dies in der WO 2007/054311 beschrieben ist.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform einer Kühlvorrichtung,
- Fig. 2: eine schematische Darstellung eines beispielhaften Einbaus des Kühlturms mit mehreren parallel geschalteten, sich vorzugsweise jeweils allgemein vertikal erstreckenden Flüssigkeitskanälen,
- Fig. 3: eine schematische Darstellung eines beispielhaften Einbaus des Kühlturms mit einem nach Art eines U-Rohres ausgeführten Rücklaufkanal,
- Fig. 4: eine schematische Vorderansicht einer beispielhaften Ausführungsform eines Rahmenelements, das als Flüssigkeitsrahmen einsetzbar ist,
- Fig. 5: eine schematische Vorderansicht einer beispielhaften Ausführungsform eines Rahmenelements, das als Kühlgasrahmen einsetzbar ist,
- Fig. 6: eine schematische, perspektivische auseinandergezogene Ansicht einer beispielhaften Ausführungsform eines mehrere Rahmenelemente beispielsweise gemäß den Fig. 4 und 5 umfassenden Einbaus des Kühlturms,
- Fig. 7: eine schematische perspektivische Darstellung einer beispielhaften Ausführungsform eines z.B. für einen Kühlgasrahmen bestimmten gitterartigen Abstandshalters, und
- Fig. 8: eine schematische Darstellung einer beispielhaften Ausführungsform einer eine mehrstufige Membrandestillationsvorrichtung sowie eine Kühlvorrichtung umfassenden Membrandestillationsanlage.

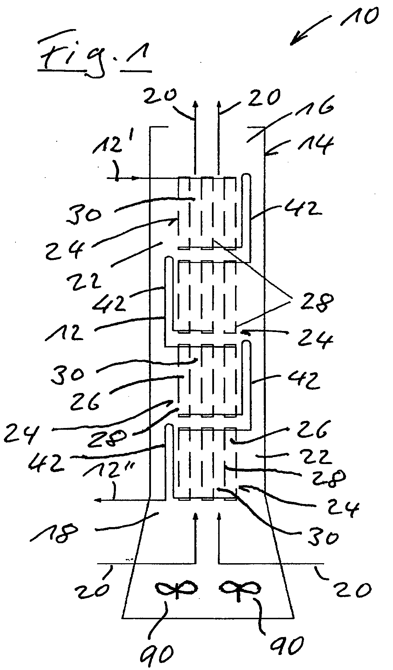

Fig. 1 zeigt in schematischer Darstellung eine beispielhafte Ausführungsform einer Kühlvorrichtung 10 zur Kühlung einer Flüssigkeit 12, beispielsweise Wasser, mit einem vertikalen Kühlturm 14, dem die abzukühlende Flüssigkeit 12' in einem oberen Bereich 16 zugeführt und aus dem die abgekühlte Flüssigkeit 12" in einem unteren Bereich 18 abgeführt wird.

Die Flüssigkeit 12 wird in dem Kühlturm 14 durch ein von unten nach oben strömendes Kühlgas 20, beispielsweise Luft, abgekühlt. Dabei kann dem Kühlturm 14 im unteren Bereich beispielsweise Zuluft und/oder Umgebungsluft zugeführt werden. Aus dem oberen Bereich des Kühlturms 14 tritt dann entsprechend Abluft oder befeuchtete Luft aus. Zur Erhöhung der Kühlleistung können im unteren Bereich des Kühlturms 14 ein oder mehrere Ventilatoren 90 vorgesehen sein, was eine Zwangsbelüftung mit sich bringt.

In dem vom Kühlgas 20 durchströmten Gasraum 22 des Kühlturms 14 ist wenigstens ein Einbau 24 vorgesehen, in dem die Flüssigkeit 12 geführt ist. Dabei umfasst ein jeweiliger Einbau 24 wenigstens einen Flüssigkeitskanal 26, der zumindest teilweise durch eine beidseitig dampfdurchlässige flüssigkeitsdichte Membranwand 28 vom Gasraum 22 des Kühlturms 14 getrennt ist.

Wie anhand der Fig. 1 zu erkennen ist, können in dem vom Kühlgas 20 durchströmten Gasraum 22 des Kühlturms 14 mehrere vertikal aufeinander folgende, in Reihe geschaltete Einbauten 24 vorgesehen sein.

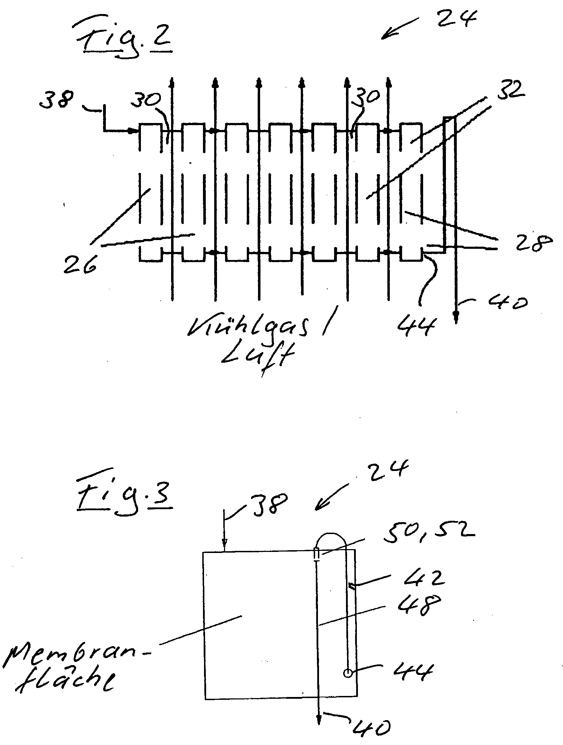

Fig. 2 zeigt in schematischer Darstellung eine beispielhafte Ausführungsform eines Einbaus 24 des Kühlturms 14. Danach kann ein jeweiliger Einbau 24 mehrere parallel geschaltete, sich vorzugsweise jeweils allgemein vertikal erstreckende Flüssigkeitskanäle 26 umfassen. Dabei können die Flüssigkeitskanäle 26 wie dargestellt insbesondere horizontal nebeneinander angeordnet sein.

Wie in der Fig. 2 dargestellt, kann ein entsprechender Einbau 24 insbesondere mehrere parallel geschaltete, horizontal nebeneinander angeordnete Flüssigkeitskanäle 26 umfassen, die jeweils auf wenigstens zwei einander gegenüberliegenden Seiten durch eine Membranwand 28, insbesondere Flachmembran, vom Gasraum 22 des Kühlturms 14 getrennt sind (vgl. auch nochmals Fig. 1). Dabei weist ein jeweiliges Paar von horizontal benachbarten Flüssigkeitskanälen 26 einander zugewandte Membranwände 28, insbesondere Flachmembranen, auf, die seitlich, d.h. zwischen den beiden betreffenden Flüssigkeitskanälen 26 einen Gaskanal 30 begrenzen, durch den Kühlgas 20 des den Gasraum 22 beaufschlagenden Kühlgasstroms hindurchströmt (vgl. auch nochmals Fig. 1).

Die abzukühlende warme Flüssigkeit 12' kann also von oben dem Kühlturm 14 und dem ersten Flüssigkeitskanal 26 bzw. Membranelement zugeführt werden. Von unten strömt Kühlgas, insbesondere Luft, durch die die Flüssigkeitskanäle 26 bildenden Membranelemente entgegen der Strömungsrichtung der Flüssigkeit 12 nach oben. Das Kühlgas erwärmt sich beim Strömen nach oben und belädt sich mit Wasser, wobei die Dichte abnimmt und sich eine aufsteigende Kühlgas- bzw. Luftströmung einstellt.

Die von oben nach unten strömende Flüssigkeit 12 ist bevorzugt so geführt, dass sie einen stetigen Temperaturverlauf von warm im oberen Bereich nach kalt im unteren Bereich in den Einbauten 24 des Kühlturms 14 aufweist.

Die Flüssigkeit ist von oben nach unten vorteilhafterweise so zugeführt, dass nicht die ganze Flüssigkeitssäule der zu kühlenden Flüssigkeit auf den insbesondere in Strömungsrichtung unteren Membranwänden 28 lastet, was weiter unten anhand der Fig. 3 näher erläutert wird.

Die Einbauten 24 können aus Einzelelementen aufgebaut sein. Dabei kann es sich bei diesen Einzelelementen beispielsweise um rechteckige oder quadratische Rahmenelemente handeln. Solche Rahmenelemente können zumindest auf einer Seite mit einer dampfdurchlässigen flüssigkeitsdichten Membranwand 28 bespannt sein. Diese Rahmenelemente können in jeweils vertikaler Ausrichtung beispielsweise horizontal aufeinander folgend in einem jeweiligen Einbau 24 verbaut sein. Die Rahmenelemente werden von unten nach oben von der Flüssigkeit 12 durchströmt. Aus den Rahmenelementen ergeben sich nach dem Zusammenführen die Flüssigkeitskanäle 26 sowie die Gaskanäle 30.

Bei den dampfdurchlässigen, flüssigkeitsdichten Membranwänden 28 kann es sich beispielsweise um mikroporöse hydrophobe Membranen beispielsweise aus PTFE handeln.

Ein jeweiliger Einbau 24 kann also mehrere miteinander verbundene Rahmenelemente 32 umfassen, wobei die Funktionseinheiten Flüssigkeitskänal 26 und Gaskanal 30 jeweils in Form eines solchen Rahmenelements 32 vorgesehen sind.

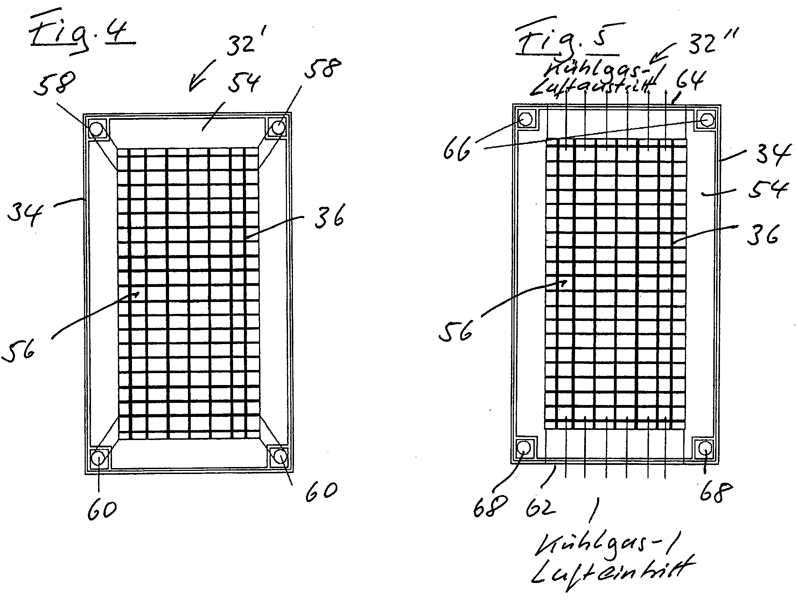

Die Rahmenelemente 32 können mit Stegstrukturen 34 versehen und über diese Stegstrukturen 34 miteinander verbunden sein (vgl. auch die Fig. 4 bis 6).

Zudem können die Rahmenelemente 32 insbesondere zur Abstützung der Membranwände 28 jeweils mit einem insbesondere gitterartigen Abstandshalter 36 versehen sein (vgl. insbesondere die Fig. 4 bis 7).

Die zwischen einem jeweiligen Flüssigkeitskanal 26 und einem jeweiligen diesem benachbarten Gaskanal 30 vorgesehene Membranwand 28 kann einem der beiden betreffenden aneinander grenzenden Rahmenelemente 32 zugeordnet sein.

Wie anhand der Fig. 2 zu erkennen ist, wird die abzukühlende Flüssigkeit über einen Zulauf 38 dem ersten Rahmenelement 32 eines jeweiligen Einbaus 24 zugeführt, während die abgekühlte Flüssigkeit über einen Ablauf 40 aus dem letzten Rahmenelement 32 des Aufbaus 24 entnommen wird.

Die vertikal aufeinander folgenden, in Reihe geschalteten Einbauten 24 können insbesondere so miteinander verbunden sein, dass deren Flüssigkeitskanäle 26 jeweils vollständig mit Flüssigkeit 12 gefüllt sind.

Wie beispielsweise anhand der Fig. 3 zu erkennen ist, können dazu vertikal benachbarte Einbauten 24 jeweils über einen Rücklaufkanal 42 miteinander verbunden sein, der zwischen einem in einem unteren Bereich eines Flüssigkeitskanals 26 des in Strömungsrichtung der Flüssigkeit 12 betrachtet vorangehenden Einbaus vorgesehenen Flüssigkeitsauslass 44 (siehe auch Fig. 2) und einem in einem oberen Bereich eines Flüssigkeitskanals 26 des darauf folgenden Einbaus 24 vorgesehenen Flüssigkeitseinlass oder Zulauf 38 angeordnet und ausgehend vom Flüssigkeitsauslass 44 des vorangehenden Einbaus 24 zunächst zumindest bis zum obersten möglichen Flüssigkeitsniveau in diesem Einbau 24 nach oben geführt ist.

Der obere Bereich des Ablaufteils 48 des nach Art eines U-Rohres ausgeführten Rücklaufkanals 42 kann einen Kanalabschnitt 50 umfassen, der zumindest teilweise von einer weiteren vorzugsweise wieder beidseitig dampfdurchlässigen, flüssigkeitsdichten Membranwand 52 begrenzt ist, die einerseits mit der Flüssigkeit 12 und andererseits mit dem Gasraum 22 des Kühlturms 14 in Kontakt kommt.

Die Kühlturmflüssigkeit kann also nach dem Durchströmen der Flüssigkeitskanäle beispielsweise in einer U-Rohr-Vorrichtung geführt sein, die ein nach oben führendes Rohr, eine 180°-Umlenkung, ein Fallrohr und eine insbesondere hydrophobe, mikroporöse Membran umfassen kann. Die aus dem Kühlturmeinbau austretende Flüssigkeit wird hierbei so weit nach oben geführt, dass die Flüssigkeitskanäle des Kühlturmeinbaus stets vollständig mit Flüssigkeit gefüllt sind. Die Fallrohre oder Ablaufteile können so dimensioniert sein, dass sie nie vollständig mit Flüssigkeit gefüllt sind und es somit nicht zu einer Addition des hydrostatischen Drucks der Kühlturmeinbauten von oben nach unten kommt. Damit im Stillstand das Fallrohr leer laufen kann, ist die U-Rohr-Vorrichtung in ihrem oberen Bereich mit einem Stück insbesondere mikroporöser, hydrophober Membran ausgestattet, die beispielsweise beidseitig dampfdurchlässig und flüssigkeitsdicht ist. Damit ist gewährleistet, dass beim Abschalten der zu kühlenden Flüssigkeit sich die Fallrohre entleeren können und umgekehrt bei einer Inbetriebnahme sich kein Gas- oder Luftpolster aufbauen kann, da das Gas- bzw. die Luft über die Membran sowohl ausströmen als auch einströmen kann.

Wie beispielsweise den Fig. 4 bis 6 entnommen werden kann, kann ein jeweiliger Einbau 24 des Kühlturms 14 insbesondere als modulares Strömungssystem mit einer Vielzahl von Rahmenelementen 32 ausgeführt sein. Dabei können beispielsweise die verschiedenen Funktionseinheiten Flüssigkeitskanal 26 und Gaskanal 30 jeweils in Form eines solchen Rahmenelements 32 vorgesehen sein.

Die Rahmenelemente sind vorzugsweise mit Stegstrukturen 34 versehen, über die sie insbesondere zur Bildung der Flüssigkeitskanäle 26 sowie der Gaskanäle 30 eines jeweiligen Einbaus 24 miteinander verbindbar sind. Dabei können die verschiedenen Rahmenelemente über die Stegstrukturen 34 beispielsweise miteinander verschweißt oder verklebt werden. Werden beispielsweise Schweißstegstrukturen verwendet, so kann zur Verbindung der Rahmenelemente beispielsweise ein Reibschweißverfahren, Laserschweißverfahren und/oder Heizelementschweißverfahren angewandt werden.

Die Rahmenelemente 32 umfassen jeweils einen von einem äußeren Rahmen 54 umschlossenen Innenbereich 56, der vorzugsweise mit einem insbesondere gitterartigen Abstandshalter 36 versehen ist.

Fig. 4 zeigt in schematischer Vorderansicht eine beispielhafte Ausführungsform eines Rahmenelements 32, das als Flüssigkeitsrahmen einsetzbar ist. Das Rahmenelement 32 kann auf den beiden Seiten des Abstandshalters 36 jeweils mit einer Membranwand bespannt sein und führt die Flüssigkeit 12 von oben nach unten im Kühlturm 14. Im Rahmenelement 32 sind Eintrittsöffnungen 58 sowie Austrittsöffnungen 60 für die Flüssigkeit 12 vorgesehen. Wie anhand der Fig. 4 zu erkennen ist, kann beispielsweise in den beiden oberen Eckbereichen des Rahmenelements 32 jeweils eine Eintrittsöffnung 58 und in den beiden unteren Eckbereichen des Rahmenelements 32 jeweils eine Austrittsöffnung 60 vorgesehen sein. Die Membranwände müssen nicht zwangsläufig an diesem Flüssigkeitsrahmen vorgesehen sein. Sie können alternativ auch an dem beispielsweise in Fig. 5 wiedergegebenen Kühlgasrahmen vorgesehen sein. Es ist auch denkbar, dass die Rahmen jeweils nur an einer Seite mit einer Membranwand bespannt sind. Entscheidend ist, dass ein jeweiliger Flüssigkeitskanal und ein jeweiliger daran angrenzender Kühlgaskanal durch eine solche Membranwand voneinander getrennt sind.

Fig. 5 zeigt in schematischer Vorderansicht eine beispielhafte Ausführungsform eines Rahmenelements 32, das als Kühlgasrahmen einsetzbar ist. Im vorliegenden Fall ist das Rahmenelement 32 sowohl unten als auch oben offen, um im unteren Bereich eine Eintrittsöffnung 62 und im oberen Bereich eine Austrittsöffnung 64 für das Kühlgas bzw. die Luft zu bilden.

Beispielsweise in den beiden oberen Eckbereichen des Rahmenelements 32 sind Durchführungsöffnungen 66 für die zu kühlende Flüssigkeit 12' vorgesehen. Beispielsweise in den beiden unteren Eckbereichen sind Durchführungsöffnungen 68 für die abgekühlte Flüssigkeit 12" vorgesehen.

Ein solcher Kühlgasrahmen führt die Gasströmung im Kühlturm 14 von unten nach oben. Einsätze, wie beispielsweise der Abstandshalter 36 stützen die angrenzenden Membranwände, die den benachbarten Rahmenelementen oder diesem Kühlgasrahmenelement zugeordnet sein können. Der insbesondere gitterartige Abstandshalter 36 sorgt für eine Zwangsverwirbelung des Kühlgases und für einen besseren Wasserdampfübergang von der Membran in die Luft. Wie bereits erwähnt, sind oben und unten Durchführungsöffnungen 66 bzw. 68 für die abzukühlende bzw. abgekühlte Flüssigkeit vorgesehen.

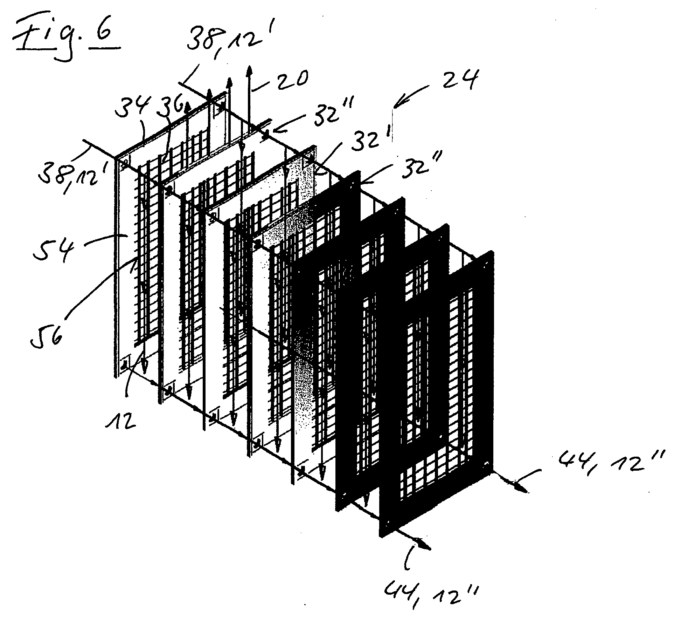

Fig. 6 zeigt in schematischer, perspektivischer auseinandergezogener Ansicht eine beispielhafte Ausführungsform eines mehrere Rahmenelemente 32 umfassenden Einbaus 24 des Kühlturms 14. Dabei können abwechselnd beispielsweise Flüssigkeitsrahmen 32' und Kühlgasrahmen 32" der in den Fig. 4 und 5 dargestellten Art aufeinander folgend verbaut werden. Dabei strömen das Kühlgas 20 und die Flüssigkeit 12 im Gegenstrom.

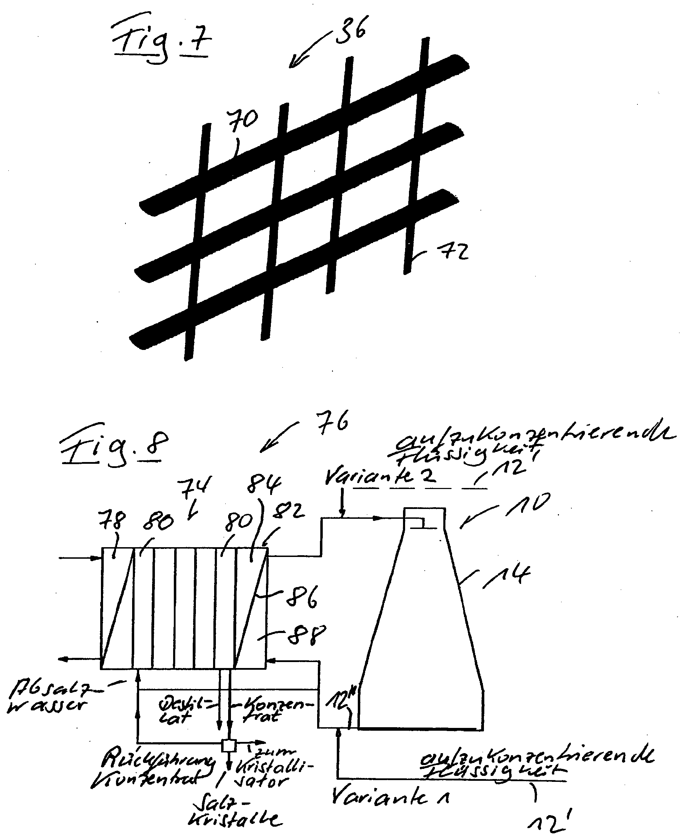

Fig. 7 zeigt in schematischer perspektivischer Darstellung eine beispielhafte Ausführungsform eines z.B. für einen Kühlgasrahmen bestimmten gitterartigen Abstandshalter 36.

Ein solcher gitterartiger Abstandshalter 36 kann also beispielsweise in einem Gaskanal 30 angeordnet sein. Dabei kann das Kühlgas z.B. in Richtung der in der Fig. 7 horizontal verlaufenden Stege strömen. Die zu diesen senkrechten, in der Fig. 7 vertikalen Stege 72 besitzen zwei Funktionen. So stützen sie im Stapelaufbau die Membran zum Gaskanal hin ab und zerstören in der Gasströmung immer wieder die Grenzschicht des Kühlgases zur Membran, wodurch die sich ausbildende Temperatur- und Konzentrationspolarisation der Luft an der Membran regelmäßig überwunden wird.

Fig. 8 zeigt in schematischer Darstellung eine beispielhafte Ausführungsform einer eine mehrstufige Membrandestillationsvorrichtung 74 sowie eine Kühlvorrichtung 14 umfassenden Membrandestillationsanlage 76. Dabei kann die Kühlvorrichtung 14 beispielsweise so ausgeführt sein, wie dies zuvor unter anderem anhand der Fig. 1 bis 7 beschrieben wurde.

Die der Aufkonzentration der Flüssigkeit 12 dienende mehrstufige Membrandestillationsvorrichtung 74 umfasst einen Verdampfer oder Dampferzeuger 78, mehrere Kondensations- und Verdampfungsstufen 80 sowie einen Kondensator 82.

Die aufzukonzentrierende Flüssigkeit 12' wird dem den Kondensator 82 der Membrandestillationsvorrichtung 74 und die Kühlvorrichtung 14 umfassenden System zugeführt. Die Kühlvorrichtung 10 ist der Membrandestillationsvorrichtung 74 zur Vorkonzentration der Flüssigkeit 12 vorgeschaltet. Während der Vorkonzentration wird dem Kondensator 82 abgekühlte Flüssigkeit 12" aus der Kühlvorrichtung 10 als Kühlfluid zugeführt.

Der Kondensator 82 der Membrandestillationsvorrichtung 74 kann einen Dampfraum 84 sowie einen von diesem durch eine Kondensationswand 86 getrennten Kühlfluidkanal 88 umfassen, der während der Vorkonzentration Teil eines den bzw. die Einbauten 24 der Kühlvorrichtung 10 umfassenden Kühlmittelkreislaufs ist, in dem als Kühlmittel die aufzukonzentrierende Flüssigkeit zirkuliert.

Mit einer solchen Membrandestillationsanlage 76 kann also ein mehrstufiges Aufkonzentrationsverfahren mit einem Kühlturm mit erfindungsgemäßen Einbauten zur Vorkonzentration und einem nachgeschalteten Aufkonzentrationsverfahren ausgeführt werden. Die beispielsweise aus einem Bohrloch für die Förderung von unkonventionellen Gasvorkommen kommende Flüssigkeit kann zur Vorkonzentration dem System aus Kühlturm und Kondensator zugeführt werden. Kommt die aufzukonzentrierende Flüssigkeit oder Lösung 12' mit einer Temperatur kleiner als die Kondensatoraustrittstemperatur in dieses System, dann kann die Lösung wie in der Fig. 8 unten rechts dargestellt gemäß Variante 1, also nach dem Auslass des Kühlturms 14 zugeführt werden. Ist die Temperatur der aufzukonzentrierenden Flüssigkeit oder Lösung 12' gleich oder höher als die Kondensatoraustrittstemperatur, dann wird die aufzukonzentrierende Flüssigkeit 12' nach dem Kondensator 82 und vor dem Kühlturm 14 gemäß der Variante 2 (siehe Fig. 8 rechts oben) zugeführt.

Durch Verdunsten von Wasser aus der aufzukonzentrierenden Lösung erhöht sich die Konzentration der Lösung. Ab einer bestimmten, vordefinierten Konzentration kann so genanntes Absalzwasser aus dem Lösungskreislauf des Kühlturms entnommen werden.

Das Absalzwasser wird einer weiteren Aufkonzentration zugeführt. Diese weitere Aufkonzentration kann mit Verdampfern erfolgen. Bei diesen Verdampfern kann es sich insbesondere um mehrstufige Entspannungsverdampfer handeln. Wie eingangs beschrieben, kann es sich bei der Membrandestillationsvorrichtung insbesondere um eine Vakuum-Multieffekt-Membrandestillationsvorrichtung handeln.

In den Verdampfern wird die im Kühlturm vorkonzentrierte Lösung, soweit möglich, bis an die Sättigung aufkonzentriert. Im normalen Betriebszustand ist die aufkonzentrierte Lösung nach der Aufkonzentration wärmer als die Umgebung der Anlage, so dass nach dem Herauspumpen der aufkonzentrierten Lösung bei der Abkühlung auf z.B. Umgebungstemperatur ein Teil der enthaltenen Salze bereits auskristallisiert. Dieses Salzkristalle können abgetrennt werden, und die verbleibende Lösung kann wieder ganz oder teilweise der Aufkonzentration zugeführt werden. Der verbleibende Teil der aufkonzentrierten Lösung kann nach der Salzkristallabtrennung auch ganz oder teilweise einer weiteren Aufkonzentration in beispielsweise einem Kristallisator zugeführt werden.

### Bezugszeichenliste

- 10: Kühlvorrichtung
- 12: Flüssigkeit
- 12': abzukühlende Flüssigkeit
- 12": abgekühlte Flüssigkeit
- 14: Kühlturm
- 16: oberer Bereich des Kühlturms
- 18: unterer Bereich des Kühlturms
- 20: Kühlgas
- 22: Gasraum
- 24: Einbau
- 26: Flüssigkeitskanal
- 28: Membranwand
- 30: Gaskanal
- 32: Rahmenelement
- 32': Flüssigkeitsrahmen
- 32": Kühlgasrahmen
- 34: Stegstruktur
- 36: Abstandshalter
- 38: Zulauf, Einlass
- 40: Ablauf
- 42: Rücklaufkanal
- 44: Flüssigkeitsauslass
- 46: Flüssigkeitseinlass
- 48: Ablaufteil
- 50: Kanalabschnitt
- 52: Membranwand
- 54: äußerer Rahmen
- 56: Innenbereich
- 58: Eintrittsöffnung
- 60: Austrittsöffnung
- 62: Eintrittsöffnung
- 64: Austrittsöffnung
- 66: Durchführöffnung
- 68: Durchführöffnung
- 70: Steg
- 72: Steg
- 74: mehrstufige Membrandestillationsvorrichtung
- 76: Membrandestillationsanlage
- 78: Verdampfer
- 80: Kondensations- und Verdampfungsstufe
- 82: Kondensator
- 84: Dampfraum
- 86: Kondensationswand
- 88: Kühlfluidkanal
- 90: Ventilator

## Patentansprüche

1. Kühlvorrichtung (10) zur Kühlung einer Flüssigkeit (12), mit einem vertikalen Kühlturm (14), dem die abzukühlende Flüssigkeit (12') in einem oberen Bereich (16) zugeführt und aus dem die abgekühlte Flüssigkeit (12") in einem unteren Bereich (18) abgeführt wird, wobei die Flüssigkeit (12) in dem Kühlturm (14) durch ein von unten nach oben strömendes Kühlgas (20) abgekühlt wird, in dem vom Kühlgas (20) durchströmten Gasraum (22) des Kühlturms (14) mehrere Einbauten (24) vorgesehen sind, in denen die Flüssigkeit (12) geführt ist, und ein jeweiliger Einbau (24) wenigstens einen Flüssigkeitskanal (26) umfasst, wobei der Kühlturm (14) ein oder mehrere Ventilatoren (90) aufweist und der wenigstens eine Flüssigkeitskanal (26) zumindest teilweise durch eine beidseitig dampfdurchlässige, flüssigkeitsdichte Membranwand (28) vom Gasraum (22) des Kühlturms (14) getrennt ist,
**dadurch gekennzeichnet,**
**dass** die Einbauten (24) vertikal aufeinanderfolgend und in Reihe geschaltet sind und ferner so miteinander verbunden sind, dass deren Flüssigkeitskanäle (26) jeweils vollständig mit Flüssigkeit (12) gefüllt sind, wobei vertikal benachbarte Einbauten (24) jeweils über einen Rücklaufkanal (42) miteinander verbunden sind, der zwischen einem in einem unteren Bereich eines Flüssigkeitskanals (26) des in Strömungsrichtung der Flüssigkeit (12) betrachtet vorangehenden Einbaus (24) vorgesehenen Flüssigkeitsauslass (44) und einem in einem oberen Bereich eines Flüssigkeitskanals (26) des darauffolgenden Einbaus (24) vorgesehenen Flüssigkeitseinlass (38) angeordnet und ausgehend vom Flüssigkeitsauslass (44) des vorangehenden Einbaus (24) zunächst zumindest bis zum obersten möglichen Flüssigkeitsniveau in diesem Einbau (24) nach oben geführt ist, dass der Rücklaufkanal (42) nach Art eines U-Rohres ausgeführt ist, und
**dass** der obere Bereich des Ablaufteils (48) des nach Art eines U-Rohres ausgeführten Rücklaufkanals einen Kanalabschnitt (50) umfasst, der zumindest teilweise von einer weiteren vorzugsweise wieder beidseitig dampfdurchlässigen, flüssigkeitsdichten Membranwand (52) begrenzt ist, die einerseits mit der Flüssigkeit (12) und andererseits mit dem Gasraum (22) des Kühlturms (14) in Kontakt kommt.

2. Kühlvorrichtung nach Anspruch 1,
**dadurch gekennzeichnet,**
**dass** wenigstens ein Einbau (24) mehrere parallel geschaltete, sich vorzugsweise jeweils allgemein vertikal erstreckende Flüssigkeitskanäle (26) umfasst.

3. Kühlvorrichtung nach Anspruch 2,
**dadurch gekennzeichnet,**
**dass** die parallel geschalteten Flüssigkeitskanäle (26) horizontal nebeneinander angeordnet sind.

4. Kühlvorrichtung nach Anspruch 3,
**dadurch gekennzeichnet,**
**dass** wenigstens ein Einbau (24) vorgesehen ist, der mehrere parallel geschaltete, horizontal nebeneinander angeordnete Flüssigkeitskanäle (26) umfasst, die jeweils auf wenigstens zwei einander gegenüberliegenden Seiten durch eine Membranwand (28), insbesondere Flachmembran, vom Gasraum (22) des Kühlturms (14) getrennt sind, wobei ein jeweiliges Paar von horizontal benachbarten Flüssigkeitskanälen (26) einander zugewandte Membranwände (28), insbesondere Flachmembranen, aufweist, die seitlich einen Gaskanal (30) begrenzen, durch den Kühlgas (20) des den Gasraum (22) beaufschlagenden Kühlgasstroms hindurchströmt.

5. Kühlvorrichtung nach Anspruch 4,
**dadurch gekennzeichnet,**
**dass** ein jeweiliger Einbau (24) mehrere miteinander verbundene Rahmenelemente (32) umfasst, wobei die Funktionseinheiten Flüssigkeitskanal (26) und Gaskanal (30) jeweils in Form eines solchen Rahmenelements (32) vorgesehen sind.

6. Kühlvorrichtung nach Anspruch 5,
**dadurch gekennzeichnet,**
**dass** die Rahmenelemente mit Stegstrukturen (34) versehen und über diese Stegstrukturen (34) miteinander verbunden sind.

7. Kühlvorrichtung nach Anspruch 5 oder 6,
**dadurch gekennzeichnet,**
**dass** die Rahmenelemente (32) jeweils mit einem insbesondere gitterartigen Abstandshalter (36) versehen sind.

8. Kühlvorrichtung nach einem der Ansprüche 5 bis 7,
**dadurch gekennzeichnet,**
**dass** die zwischen einem jeweiligen Flüssigkeitskanal (26) und einem jeweiligen diesem benachbarten Gaskanal (30) vorgesehene Membranwand (28) einem der beiden betreffenden aneinandergrenzenden Rahmenelemente (32) zugeordnet ist.

9. Membrandestillationsanlage (76) mit einer mehrstufigen, einen Verdampfer (78), mehrere Kondensations- und Verdampfungsstufen (80) sowie einen Kondensator (82) umfassenden Membrandestillationsvorrichtung (74) zur Aufkonzentration einer Flüssigkeit (12) und einer Kühlvorrichtung (10) nach einem der vorhergehenden Ansprüche, wobei die aufzukonzentrierende Flüssigkeit (12') dem den Kondensator (82) der Membrandestillationsvorrichtung (74) und die Kühlvorrichtung (14) umfassenden System zugeführt wird, die Kühlvorrichtung (14) der Membrandestillationsvorrichtung (74) zur Vorkonzentration der Flüssigkeit (12) vorgeschaltet ist und dem Kondensator (82) während der Vorkonzentration abgekühlte Flüssigkeit (12") aus der Kühlvorrichtung (10) als Kühlfluid zugeführt wird.

10. Membrandestillationsanlage (76) nach Anspruch 9,
**dadurch gekennzeichnet,**
**dass** der Kondensator (82) der Membrandestillationsvorrichtung (74) einen Dampfraum (84) sowie einen von diesem durch eine Kondensationswand (86) getrennten Kühlfluidkanal (88) umfasst, der während der Vorkonzentration Teil eines den bzw. die Einbauten (24) der Kühlvorrichtung (10) umfassenden Kühlmittelkreislaufs ist, in dem als Kühlmittel die aufzukonzentrierende Flüssigkeit zirkuliert.

## Claims

1. A cooling apparatus (10) for cooling a liquid (12), having a vertical cooling tower (14) to which the liquid (12') to be cooled is supplied in an upper region (16) and from which the cooled liquid (12") is led off in a lower region (18), wherein the liquid (12) in the cooling tower (14) is cooled by a cooling gas (20) flowing from bottom to top; in which a plurality of installations (24) in which the liquid (12) is conducted are provided in the gas space (22) of the cooling tower (14) flowed through by the cooling gas (20) and a respective installation (24) comprises at least one liquid passage (26), with the cooling tower (14) having one or more fans (90) and with the at least one liquid passage (26) being separated at least partly from the gas space (22) of the cooling tower (14) by a membrane wall (28) which is vapor permeable and liquid tight at both sides,
**characterized in that**
the installations (24) are connected following one another vertically and are connected in series and are furthermore connected to one another such that their liquid passages (26) are each completely filled with liquid (12), with vertically adjacent installations (24) each being connected to one another via a return passage (42) which is arranged between a liquid outlet (44) provided in a lower region of a liquid passage (26) of the preceding installation (24) viewed in the direction of flow of the liquid (12) and a liquid inlet (38) provided in an upper region of a liquid passage (26) of the following installation (24) and is conducted upwardly starting from the liquid outlet (44) of the preceding installation (24) initially at least up to the uppermost possible liquid level in this installation (24);
**in that** the return passage (42) is configured in the manner of a U pipe;
and
**in that** the upper region of the outflow part (48) of the return passage configured in the manner of a U pipe comprises a passage section (50) which is at least partly bounded by a further liquid tight membrane wall (52), again preferably vapor permeable, at both sides, which comes into contact with the liquid (12), on the one hand, and with the gas space (22) of the cooling tower (14), on the other hand.

2. A cooling apparatus in accordance with claim 1,
**characterized in that**
at least one installation (24) comprises a plurality of liquid passages (26) connected in parallel and each preferably extending generally vertically.

3. A cooling apparatus in accordance with claim 2,
**characterized in that**
the liquid passages (26) connected in parallel are arranged horizontally next to one another.

4. A cooling apparatus in accordance with claim 3,
**characterized in that**
at least one installation (24) is provided which comprises a plurality of liquid passages (26) which are connected in parallel, which are arranged horizontally next to one another and which are each separated from the gas space (22) of the cooling tower (14) by a membrane wall (28), in particular a flat membrane, at at least two mutually oppositely disposed sides, with a respective pair of horizontally adjacent liquid passages (26) having mutually facing membrane walls (28), in particular flat membranes, which laterally bound a gas passage (30) through which cooling gas (20) of the cooling gas flow acting on the gas space (22) flows.

5. A cooling apparatus in accordance with claim 4,
**characterized in that**
a respective installation (24) comprises a plurality of mutually connected frame elements (32), with the functional units of liquid passage (26) and gas passage (30) each being provided in the form of such a frame element (32).

6. A cooling apparatus in accordance with claim 5,
**characterized in that**
the frame elements are provided with web structures (34) and are connected to one another via these web structures (34).

7. A cooling apparatus in accordance with claim 5 or claim 6,
**characterized in that**
the frame elements (32) are each provided with a spacer (36), in particular a grid-like spacer.

8. A cooling apparatus in accordance with any one of the claims 5 to 7,
**characterized in that**
the membrane wall (28) provided between a respective liquid passage (26) and a respective gas passage (30) adjacent thereto is associated with one of the two respective mutually adjacent frame elements (32).

9. A membrane distillation plant (76) having a multistage membrane distillation apparatus (74) comprising an evaporator (78), a plurality of condensation and evaporation stages (80) as well as a condenser (82) for concentrating a liquid (12) and having a cooling apparatus (10) in accordance with any one of the preceding claims, wherein the liquid (12') to be concentrated is supplied to the system comprising the condenser (82) of the membrane distillation apparatus (74) and the cooling apparatus (14); the cooling apparatus (14) is connected upstream of the membrane distillation apparatus (74) for preconcentrating the liquid (12); and liquid (12") cooled during the preconcentration is supplied as cooling fluid (12") to the condenser (82) from the cooling apparatus (10).

10. A membrane distillation plant (76) in accordance with claim 9,
**characterized in that**
the condenser (82) of the membrane distillation apparatus (74) comprises a vapor space (84) as well as a cooling fluid passage (88) which is separated therefrom by a condensation wall (86) and which is a part of a coolant circuit comprising the installation or installations (24) of the cooling apparatus (10) during the preconcentration, in which coolant circuit the liquid to be concentrated circulates as a coolant.

## Revendications

1. Dispositif de refroidissement (10) pour refroidir un liquide (12), avec une tour de refroidissement verticale (14) dans laquelle on amène le liquide à refroidir (12') dans une zone supérieure (16) et hors de laquelle on évacue le liquide refroidi (12") dans une zone inférieure (18), dans lequel le liquide (12) est refroidi dans la tour de refroidissement (14) par un gaz de refroidissement (20) s'écoulant du bas en haut, dans la chambre de gaz (22) traversée par l'écoulement de
gaz de refroidissement (20), de la tour de refroidissement (14) il est prévu plusieurs éléments intégrés (24) dans lesquels le liquide (12) est guidé, et un élément intégré respectif (24) inclut au moins un canal à liquide (26), dans lequel la tour de refroidissement (14) comprend un ou plusieurs ventilateurs (90) et ledit au moins un canal à liquide (26) est au moins partiellement séparé de la chambre de gaz (22) de la tour de refroidissement (14) par une paroi formant membrane (28) perméable à la vapeur et étanche aux liquides sur les deux côtés,
**caractérisé en ce que**
les éléments intégrés (24) sont montés verticalement les uns à la suite des autres et en rangée, et sont en outre reliés les uns aux autres de telle façon que leurs canaux à liquide (26) sont respectivement entièrement remplis de liquide (12), dans lequel des éléments intégrés (24) voisins en sens vertical sont reliés les uns aux autres respectivement via un canal de retour (42) qui est agencé entre une sortie de liquide (44) prévue dans une zone inférieure d'un canal à liquide (26) de l'élément intégré (24) précédent, considéré en direction d'écoulement du liquide (12), et une entrée de liquide (38) prévue dans une zone supérieure d'un canal à liquide (26) de l'élément intégré suivant (24) et, en partant de la sortie de liquide (44) de l'élément intégré précédent (24), est mené tout d'abord vers le haut au moins jusqu'au plus haut niveau possible de liquide dans cet élément intégré (24),
**en ce que** le canal de retour (42) est réalisé à la manière d'un tube en U, et
**en ce que** la zone supérieure de la partie d'évacuation (48) du canal de retour réalisé à la manière d'un tube en U inclut un tronçon de canal (50) qui est délimité au moins partiellement par une autre paroi à membrane, de préférence de nouveau perméable à la vapeur et étanche aux liquides sur les deux côtés, paroi qui vient en contact d'une part avec le liquide (12) et d'autre part avec la chambre de gaz (22) de la tour de refroidissement (14).

2. Dispositif de refroidissement selon la revendication 1,
**caractérisé en ce qu'**au moins un élément intégré (24) inclut plusieurs canaux à liquide (26) branchés parallèlement et s'étendant de préférence respectivement généralement verticalement.

3. Dispositif de refroidissement selon la revendication 2,
**caractérisé en ce que** les canaux à liquide (26) branchés parallèlement sont agencés horizontalement les uns à côté des autres.

4. Dispositif de refroidissement selon la revendication 3,
**caractérisé en ce qu'**il est prévu au moins un élément intégré (24) qui inclut plusieurs canaux à liquide (26) branchés parallèlement et agencés horizontalement les uns à côté des autres, qui sont séparés respectivement sur deux côtés mutuellement opposés par une paroi à membrane (28), en particulier une membrane plate, vis-à-vis de la chambre de gaz (22) de la tour de refroidissement (14), dans lequel une paire respective de canaux à liquide (26) horizontalement voisins comportent des parois à membrane (28), en particulier des membranes plates, tournées l'une vers l'autre, qui délimitent latéralement un canal de gaz (30) à travers lequel s'écoule un gaz de refroidissement (20) du courant de gaz de refroidissement alimentant la chambre de gaz (22).

5. Dispositif de refroidissement selon la revendication 4,
**caractérisé en ce qu'**un élément intégré respectif (24) inclut plusieurs éléments en forme de cadre (32) reliés les uns aux autres, et les unités fonctionnelles comprenant le canal à liquide (26) et le canal à gaz (30) sont respectivement prévues sous la forme d'un tel élément en forme de cadre (32).

6. Dispositif de refroidissement selon la revendication 5,
**caractérisé en ce que** les éléments en forme de cadre sont dotés de structures en barrettes (34) et sont reliés les uns aux autres via ces structures en barrettes (34).

7. Dispositif de refroidissement selon la revendication 5 ou 6,
**caractérisé en ce que** les éléments en forme de cadre (32) sont respectivement dotés d'un élément d'écartement (36), en particulier semblable à une grille.

8. Dispositif de refroidissement selon l'une des revendications 5 à 7,
**caractérisé en ce que** la paroi à membrane (38) prévue entre un canal à liquide respectif (26) et un canal à gaz respectif (30) voisin de celui-ci est associée à l'un des deux éléments en forme de cadre (32) concernés mutuellement adjacents.

9. Installation de distillation à membrane (76) avec un dispositif de distillation à membrane (74) à plusieurs étages, incluant un évaporateur (72), plusieurs étages de condensation et d'évaporation (80), ainsi qu'un condenseur (82), pour la concentration d'un liquide (12), et un dispositif de refroidissement (10) selon l'une des revendications précédentes, dans lequel le liquide à concentrer (12') est amené au système incluant le condenseur (82) du dispositif de distillation à membrane (74) et le dispositif de refroidissement (14), le dispositif de refroidissement (14) du dispositif de distillation à membrane (74) est branché en amont pour une concentration préliminaire du liquide (12), et le liquide refroidi (12") provenant du dispositif de refroidissement (10) est amené à titre de fluide de refroidissement au condenseur (82) pendant la concentration préliminaire.

10. Installation de distillation à membrane (76) selon la revendication 9,
**caractérisée en ce que** le condenseur (82) du dispositif de distillation à membrane (74) inclut une chambre de vapeur (84) ainsi qu'un canal à fluide de refroidissement (88) séparé de celle-ci par une paroi de condensation (86), canal qui, pendant la concentration préliminaire, fait partie d'un circuit d'agent de refroidissement incluant le ou les élément(s) intégré(s) (24) du dispositif de refroidissement, circuit dans lequel circule le liquide à concentrer à titre d'agent de refroidissement.
